(19) Europäisches Patentamt
European Patent Office
Office européen des brevets

(11) **EP 0 988 950 A1**

(12) **DEMANDE DE BREVET EUROPEEN**

(43) Date de publication:
29.03.2000 Bulletin 2000/13

(51) Int. Cl.⁷: **B28D 1/12**

(21) Numéro de dépôt: **98202984.5**

(22) Date de dépôt: **07.09.1998**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur:
**DIAMANT BOART Société Anonyme**
**1190 Bruxelles (BE)**

(72) Inventeur: **Goblet, Bernard**
**Kansas City, MO 64116 (US)**

(74) Mandataire: **Callewaert, Jean**
**Bureau Callewaert p.v.b.a.**
**Brusselsesteenweg 108**
**3090 Overijse (BE)**

(54) **Procédé de sciage pour la taille de pierres, segment diamanté pour outil de coupe et outil de coupe muni de tels segments diamantés**

(57) Le segment diamanté (1) pour l'outil de coupe, tel qu'une scie circulaire (2), pour la taille de pierres (7), subdivisé en des éléments diamantés (3,4,5) en forme de plaquettes parallèles separés l'un de l'autre par une couche intermédiaire (6) permet de former par ces éléments diamantes (3,4,5), des rainures sensiblement parallèles (8,9,10), deux rainures successives étant séparées par une nervure (11) s'éliminant automatiquement par cisaillement lors de la formation des rainures. Les couches intermédiaires (6) peuvent être non diamantées.

Fig. 3

EP 0 988 950 A1

**Description**

La présente invention est relative à un procédé de sciage de matériaux durs, tels que de la pierre naturelle, comme le calcaire, le granit; ainsi que du béton.

Un des buts essentiels de la présente invention est de présenter un procédé de sciage du genre précité permettant non seulement d'obtenir une surface de coupe plane, mais également de réduire sensiblement l'énergie spécifique du sciage comparé aux procédés de sciage connus, faisant par exemple usage d'une scie circulaire munie de segments diamantés constitués d'éléments accolés présentant des concentrations en diamant différentes, comme décrit dans le document EP O134.124..

A cet effet, suivant le procédé de l'invention, on réalise au moyen d'un outil de coupe, tel qu'une scie circulaire, par abrasion dans les pierres à scier, au moins deux rainures sensiblement parallèles en formant entre elles une nervure dont la largeur est telle que, lorsque ces rainures atteignent une certaine profondeur, cette nervure est éliminée par cisaillement au fur et à mesure de l'avancement du sciage, essentiellement par suite du frottement provoqué par l'outil susdit sur cette nervure.

L'invention est également relative à un segment diamanté destiné à être monté sur un outil de coupe et qui est notamment destiné à la mise en oeuvre du procédé susdit.

Ce segment diamanté est caractérisé par le fait qu'il est subdivisé en des éléments diamantés successifs séparés l'un de l'autre par une couche intermédiaire qui est telle qu'elle permet de réaliser par ce segment des rainures parallèles séparées par une nervure s'éliminant automatiquement par cisaillement lors de la formation des rainures.

Avantageusement, les couches intermédiaires précitées sont non diamantées.

Enfin, l'invention concerne également un outil diamanté, notamment une scie circulaire, constitué d'un disque de coupe sur la périphérie duquel sont répartis, d'une manière uniforme, des segments diamantés, du type tel que défini ci-dessus.

D'autres détails et particularités de l'invention ressortiront de la description donnée ci-après, à titre d'exemple non limitatif, avec référence aux dessins annexés, de quelques formes de réalisation particulières de l'invention.

La figure 1 est une vue schématique partielle en coupe radiale d'une scie circulaire munie de segments diamantés suivant une forme de réalisation particulière de l'invention, avant usage.
La figure 2 est une coupe analogue d'une telle scie après un certain temps d'utilisation.
La figure 3 est une coupe partielle d'une scie circulaire en cours du sciage d'un matériau dur déterminé.
La figure 4 est une coupe partielle d'un matériau présentant un trait de scie réalisé au moyen d'une scie circulaire présentant des segments diamantés, du type tel que montré aux figures précédentes.

Dans les différentes figures, les mêmes chiffres de référence se rapportent aux même parties.

La présente invention concerne tout d'abord un procédé de sciage particulier pouvant être appliqué sur des matériaux durs, tels que de la pierre naturelle, comme le calcaire, le granit, des pierres reconstituées, etc., ainsi que du béton.

Il s'agit d'un procédé suivant lequel on réalise, au moyen d'un outil de coupe, tel qu'une scie circulaire, par effet d'abrasion, dans les pierres à tailler, au moins deux rainures relativement étroites, rapprochées et sensiblement parallèles en formant entre celles-ci une nervure d'une largeur déterminée. Cette largeur est telle que, au fur et à mesure du creusage des rainures, au moment où cette nervure atteint une certaine hauteur, par suite du frottement avec l'outil de coupe, celle-ci est détruite par cisaillement. Les débris ainsi créés sont alors évacués par cet outil en même temps que les particules formées par abrasion dans les rainures, permettant donc à l'outil de poursuivre le creusage de ces rainures sans être gêné par la présence de la nervure.

Par conséquent, lors du sciage, dans certaines zones du trait de scie, créé par l'outil de coupe, s'étendant parallèlement à une distance relativement réduite l'une de l'autre, la matière est enlevée par abrasion d'une manière continue et régulière sous forme d'une poudre ou de granules relativement fins, tandis que, dans des zones intermédiaires se situant entre les zones précitées, la matière est plutôt enlevée par à coup, c'est-à-dire de façon intermittente, sous forme de particules relativement grossières, par exemple de l'ordre du millimètre.

En fait l'élimination de la matière se situant entre les zones soumises à une abrasion est une conséquence directe de la formation des rainures qui affaiblissent automatiquement la résistance de la nervure jusqu'à ce qu'elle casse et ceci donc sans qu'un apport d'énergie supplémentaire notable ne soit nécessaire.

Ce nouvel effet, obtenu par la mise en oeuvre du procédé suivant l'invention, n'est pas du tout prévisible en présence de l'état antérieur de la technique, notamment du document EP 0133124, qui fait mention d'un outil de coupe muni de segments diamantés subdivisés en des éléments accolés en sandwich et présentant des concentrations en diamant différents.

Le but de cet outil de coupe connu est uniquement d'obtenir des surfaces de coupe planes et des segments diamantés qui s'usent régulièrement.

Contrairement à ce qui est le cas dans le procédé suivant l'invention, suivant cet état antérieur de la technique, la coupe de la pierre a uniquement lieu par abrasion, ce qui nécessite donc une énergie relativement importante.

Suivant l'invention, des résultats très satisfaisants sont obtenus en réalisant des nervures dont le rapport $\frac{H}{E}$, dans lequel H est dans lequel H est la hauteur et E l'épaisseur, des nervures est supérieur à 0,6 et de préférence supérieur ou égal à 1.

L'invention concerne également un segment diamanté pour outil de coupe, notamment pour scie circulaire, destiné à être monté sur cet outil. Ce segment est subdivisé en des éléments diamantés en forme de plaquettes parallèles séparés l'un de l'autre par une couche intermédiaire de préférence à coefficient d'usure supérieur, qui est telle à permettre de former, lors de la coupe, par ces éléments diamantés, des rainures parallèles séparées par une nervure s'éliminant automatiquement par cisaillement. Ce segment diamanté présente de préférence une section transversale légèrement trapézoïdale dont le plus grand côté est situé à la surface de coupe.

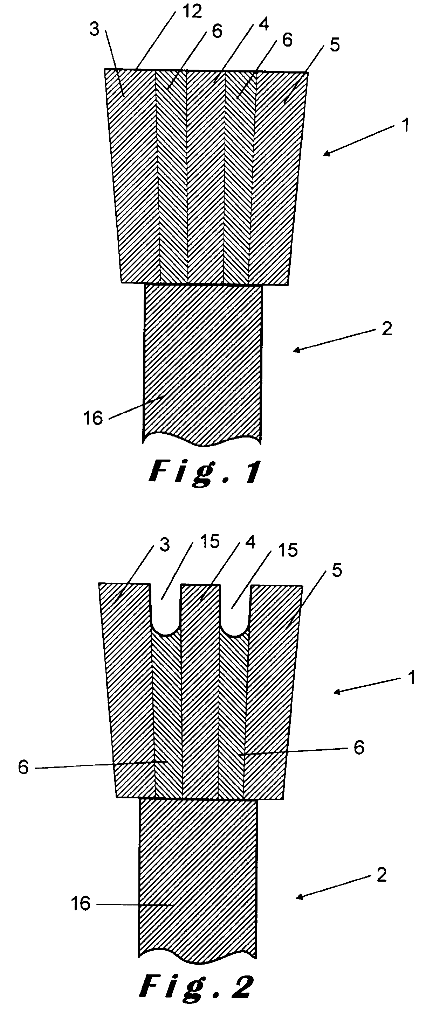

Une forme de réalisation particulière d'un tel segment a été représentée schématiquement et à grande échelle par la figure 1 sur la périphérie d'une scie circulaire 2.

Ce segment 1 est subdivisé en trois éléments diamantés 3, 4 et 5, en forme de plaquettes sensiblement parallèles, séparés chacun l'un de l'autre par une couche intermédiaire 6 d'épaisseur $E_{nd}$ à coefficient d'usure relativement supérieur qui est telle à permettre de former, lors de la coupe, par ces éléments diamantés 3, 4 et 5 d'épaisseur $E_d$ dans une pierre à tailler 7 trois rainures parallèles 8, 9 et 10 égales ou légèrement supérieures à l'épaisseur $E_d$ de ces éléments diamantés 3, 4 et 5. Ces rainures sont séparées l'une de l'autre par une nervure 11, dont la largeur est égale ou légèrement inférieure à l'épaisseur $E_{nd}$, et qui est éliminée automatiquement par cisaillement lors de la formation de ces rainures.

La figure 1 montre une partie de la périphérie d'une scie circulaire 2 avec un tel segment diamanté 1 avant usage.

La surface de coupe 12 des éléments 3, 4 et 5 ainsi que de la couche intermédiaire 6 se situe dans un même plan.

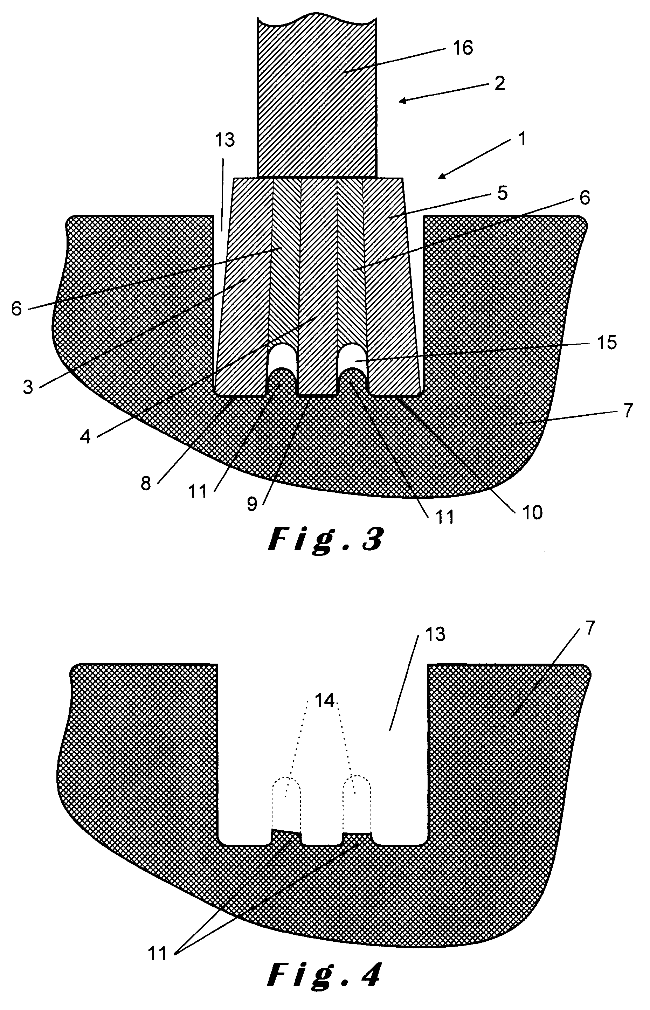

La figure 2 montre cette même partie d'une scie circulaire 2 après quelques coupes dans un matériau dur. Par suite du fait que les couches intermédiaires 6 présentent un coefficient d'usure sensiblement supérieur à celui des éléments diamantés 3, 4 et 5, ces couches intermédiaires s'useront plus rapidement que les éléments diamantés en formant ainsi, comme montré clairement à la figure 2, une surface de coupe ondulée ou rainurée 12. Cette surface 12 crée donc, comme montré aux figures 3 et 4, dans la pierre à tailler 7, un trait de scie 13 dont le fond présente les rainures 8, 9 et 10 séparées l'une de l'autre par les nervures 11, dont déjà question ci-dessus.

Au fur et à mesure de la progression du creusage, par les segments diamantés 1, du trait de scie 13, la hauteur H des nervures 11 s'accroît jusqu'au moment où, par un effet de cisaillement, elles cassent en formant des débris granulés qui sont alors entraînés par l'outil de coupe, de manière à permettre ainsi aux éléments diamantés 3, 4 et 5 de continuer leur creusage jusqu'au moment où, à nouveau, des nervures 11 d'une hauteur H sont formées qui subissent une nouvelle rupture par cisaillement. Ce phénomène de cisaillement se répète donc par intermittence au fur et à mesure de la progression du sciage.

La figure 3 montre un état intermédiaire entre un début de formation des rainures 8, 9 et 10 et des nervures correspondantes 11, alors que la figure 4 montre un trait de scie 13 juste au moment où les nervures 11 ont été éliminées par suite de cisaillement. Dans cette figure 4, les parties éliminées 14 des nervures 11 ont été représentées en traits interrompus.

Suivant l'invention, il s'est avéré qu'il est généralement très important qu'il existe un rapport $E_d/E_{nd}$ se situant entre des limites bien déterminées qui est notamment fonction de la nature des matériaux à couper. De plus, il est généralement indispensable que le creux 15 formé dans la couche intermédiaire 6 entre deux éléments diamantés consécutifs 3 et 4 et 4 et 5 soit suffisamment profond pour permettre la formation de nervures 11 de hauteur H suffisante pour qu'elles puissent être éliminées régulièrement par cisaillement en formant des débris qui peuvent être facilement évacués par l'outil de coupe au cours du sciage.

Ainsi, avantageusement, les couches intermédiaires 6 sont non diamantées.

Par ailleurs, le rapport entre l'épaisseur $E_d$ de l'élément 3, 4 ou 5 et l'épaisseur End d'une couche intermédiaire adjacente 6 est avantageusement compris entre 1 et 3 et de préférence entre 1,3 et 2,2.

De plus, l'épaisseur $E_{nd}$ de la couche intermédiaire 6 est de préférence égale ou inférieure à 1,5 mm.

Il est bien entendu que ces épaisseurs $E_d$ et $E_{nd}$ ainsi que le rapport de ces épaisseurs sont entre autres fonction de la concentration en grains de diamant, de leur granulométrie et de la nature du liant métallique utilisé pour la formation des éléments diamantés 3, 4 et 5, de même que de la composition de la couche intermédiaire 6.

D'une façon générale, ces éléments 3, 4 et 5 sont constitués de diamant et de liant se présentant en principe sous forme de poudre métallique, telle que de cobalt, et sont obtenus par compactage et frittage à haute température.

Le nombre d'éléments diamantés successifs séparés par une couche de liaison intermédiaire 6 dépend notamment de l'épaisseur du segment diamanté 1 et également de certaines contraintes de fabrication.

Préférentiellement, le segment 1 comprend un nombre impair d'éléments diamantés, afin de maintenir la symétrie des efforts de sciage.

De plus, ce nombre d'éléments sera avantageusement supérieur ou égal à 5 étant donné que l'épaisseur $E_d$ de chaque élément ne peut pas être trop importante. En effet, si le rainurage dans le matériau à scier est trop épais, l'effet de cisaillement tend à disparaître.

Il est tout d'abord nécessaire, dans la plupart des cas, que l'épaisseur $E_{nd}$ des couches intermédiaires 6 soit égale ou inférieure à celle des éléments diamantés 3, 4 et 5.

Par ailleurs, l'épaisseur minimum de ces éléments diamantés doit être compatible avec la granulométrie moyenne du diamant utilisé. Si l'épaisseur est égale ou supérieure à 2 mm, on risque de perdre une partie de l'efficacité du processus de rupture par cisaillement des nervures 11 étant donné que, de ce fait, la matière à éliminer par abrasion devient plus importante, ce qui résulte en une perte d'énergie spécifique par carat.

Ainsi, il est proposé que l'épaisseur $E_d$ soit supérieure ou égale à deux fois le diamètre moyen du diamant utilisé et inférieure ou égale à 2 mm.

D'une manière pratique, on veille généralement à ce que l'épaisseur $E_d$ soit supérieure ou égale à 1 mm et inférieure ou égale à 2 mm.

En ce qui concerne l'épaisseur $E_{nd}$ des couches intermédiaires 6, qui sont donc généralement non diamantées, elle ne peut en principe pas dépasser 1,5 mm.

En effet, au-dessus de 1,5 mm, l'usure en creux des couches intermédiaires 6 devient trop importante et les nervures formées présentent une trop grande résistance au cisaillement, de sorte que celles-ci doivent s'éliminer par abrasion au moyen des couches intermédiaires, ce qui conduit à une consommation très élevée d'énergie ou à une perte de rendement.

Afin d'augmenter la durée de vie du segment diamanté 1 suivant l'invention, la concentration en diamant dans les éléments extérieurs 3 et 5 est généralement supérieure à celle dans l'élément central 4 et, de plus, il est utile de donner à ces éléments extérieurs 3 et 5 une épaisseur quelque peu supérieure à celle de l'élément central 4 pour qu'ils puissent être convenablement supportés par le disque 16 de la scie circulaire, comme montré clairement aux figures 1 à 3.

Des essais ont montré que le sciage suivant l'invention, c'est-à-dire comportant un effet de cisaillement, permet d'obtenir un gain de la puissance consommée de 30 à 40 %, par rapport à un sciage classique uniquement par abrasion.

Ce gain d'énergie spécifique peut être utilisé, d'une part, pour accroître le débit de sciage par une augmentation de la profondeur de passe et, d'autre part, pour, à débit constant, augmenter la performance du diamant.

Ci-après sont donnés quelques exemples concrets de réalisation de segments diamantés pour scie circulaire permettant de mieux illustrer encore l'objet de la présente invention.

Dans ces exemples, la pierre sciée était formée de granite et la composition du liant pour les grains de diamant dans les éléments diamantés ainsi que celle de la couche intermédiaire étaient formées de poudre de cobalt fritté. La granulométrie du diamant était de 40-50 meshes

Par ailleurs, dans chaque exemple une comparaison a été faite avec une scie circulaire classique standard du même type, de manière à pouvoir déterminer le gain de temps ou de rendement.

Exemple 1

La scie circulaire utilisée comprenait un disque d'un diamètre de 1000 mm et les segments diamantés répartis, sur la périphérie de ce disque, étaient constitués de trois éléments diamantés d'une épaisseur $E_d$ de 1,5 mm séparés par deux couches intermédiaires d'une épaisseur $E_{nd}$ de 1 mm, tandis que la profondeur du creux formé entre ces éléments, après un certain nombre de coupes, dans la couche intermédiaire était de 0,8 mm.

La concentration en diamant dans les éléments diamantés extérieurs était de 1,3 carat par cm$^3$, alors que la concentration en diamant dans l'élément central était de 1 carat par cm$^3$.

La profondeur de passe était de 1,8 mm, tandis que la vitesse de déplacement de la scie était de 7 m par minute.

Comparé à la scie circulaire classique standard correspondante, ayant une profondeur de passe de 0,7 mm et une vitesse de déplacement de 13 m par minute, on obtient un gain de débit de sciage de 38 %.

Exemple 2

La scie circulaire utilisée comprenait un disque d'un diamètre de 1600 mm et les segments diamantés répartis, sur la périphérie de ce disque, étaient constitués de quatre éléments diamantés d'une épaisseur $E_d$ de 1,8 mm séparés par trois couches intermédiaires d'une épaisseur $E_{nd}$ de 0,93 mm, tandis que la profondeur du creux formé entre ces éléments, après un certain nombre de coupes, dans la couche intermédiaire était de 0,8 mm.

La concentration en diamant dans les éléments diamantés extérieurs était de 1,9 carat par cm$^3$, alors que la concentration en diamant dans les deux éléments centraux était de 1,7 carat par cm$^3$.

La profondeur de passe était de 15 mm, tandis que la vitesse de déplacement de la scie était de 5 m par minute.

Comparé à la scie circulaire classique standard correspondante, ayant une profondeur de passe de 10 mm et une vitesse de déplacement de 5 m par minute, on obtient un gain de débit de sciage de 50 %.

Il est entendu que l'invention n'est pas limitée aux différentes formes de réalisation du procédé, des segments diamantés et des scies circulaires, telles que décrites ci-dessus et représentées aux figures annexées.

C'est ainsi que le procédé suivant l'invention pourrait être appliqué au moyen d'outils de coupe munis de segments diamantés préalablement profilés comprenant des éléments diamantés rapportés sous forme de pierre sertie, par exemple, par des techniques connues, telles que dépôt électrolytique, collage, dépôt par plasma, etc.

Par ailleurs, dans certains cas, le segment diamanté, suivant l'invention, est constitué de quatre éléments diamantés, et même cinq ou plus, deux éléments consécutifs étant chaque fois séparés par une couche intermédiaire 6, de préférence non diamantée.

Dans ces formes de réalisation, la profondeur du creux 15 dans une couche intermédiaire déterminée et, par conséquent, la hauteur H, peut être différente de celle d'une autre couche intermédiaire. Ceci peut, par exemple, être obtenu avec des couches intermédiaires ayant des coefficients d'usure différents.

Il en est de même pour les éléments diamantés qui, dans un même segment diamanté, peuvent également présenter des coefficients d'usure différents.

De plus, cette différence des coefficients d'usure pour les éléments diamantés peut avantageusement être combinée avec des couches intermédiaires présentant également des coefficients d'usure différents l'une par rapport à l'autre. On peut même envisager de combiner des épaisseurs différentes d'éléments diamantés et/ou de couches intermédiaires avec des éléments diamantés et/ou couches intermédiaires à coefficients d'usure différents.

Le rapport entre ces coefficients différents d'usure et/ou épaisseurs peut être fonction du type de matériau à scier ou de l'effet recherché.

Dans une autre forme de réalisation du segment diamanté suivant l'invention, les couches intermédiaires peuvent être formées d'un métal moins dur que celui formant la liant dans les éléments diamantés et peuvent même contenir une certaine concentration en diamant ou autre substance abrasive.

Il est également possible de prévoir des segments diamantés présentant entre les éléments diamantés, dans les zones intermédiaires, un creux préformé par une rainure.

## Revendications

1. Procédé de sciage pour la taille de matériaux durs, tels que pierre, notamment des pierres naturelles, du béton, etc., caractérisé en ce que l'on réalise, au moyen d'un outil de coupe, tel qu'une scie circulaire, par abrasion dans les matériaux à tailler, au moins deux rainures sensiblement parallèles en formant entre elles une nervure dont la largeur et hauteur sont telles que, lors de la réalisation de ces rainures, cette nervure est éliminée par des cisaillements successifs au fur et à mesure de l'avancement du sciage, essentiellement par suite d'un frottement provoqué par l'outil susdit sur cette nervure.

2. Procédé suivant la revendication 1, caractérisé en ce que l'on réalise des nervures dont le rapport entre la hauteur et l'épaisseur est supérieur à 0,6 et de préférence supérieure ou égale à 1, ces nervures étant alors automatiquement éliminées par cisaillement.

3. Segment diamanté (1) pour outil de coupe, notamment scie circulaire (2), pour la taille de pierres (7), destiné à être monté sur cet outil et subdivisé en des éléments diamantés en forme de plaquettes parallèles, notamment segment pour la mise en oeuvre du procédé suivant la revendication 1 ou 2, caractérisé en ce que ces éléments diamantés (3, 4, 5) sont séparés l'un de l'autre par une couche intermédiaire (6) qui est telle à permettre de former par les éléments diamantés (3, 4, 5) des rainures sensiblement parallèles (8, 9, 10), deux rainures successives étant séparées par une nervure (11) s'éliminant automatiquement par cisaillement lors de la formation des rainures.

4. Segment suivant la revendication 3, caractérisé en ce que les couches intermédiaires (6) sont non diamantées.

5. Segment suivant l'une ou l'autre des revendications 3 et 4, caractérisé en ce que le rapport entre l'épaisseur d'un élément diamanté (3, 4, 5) et une couche intermédiaire adjacente (6) est comprise entre 1 et 3, et de préférence entre 1,3 et 2,2.

6. Segment suivant l'une quelconque des revendications 3 à 5, caractérisé en ce que l'épaisseur de la couche intermédiaire (6) est égale ou inférieure à 1,5 mm.

7. Segment suivant l'une quelconque des revendications 3 à 6, caractérisé en ce qu'il comprend au moins trois éléments diamantés (3, 4, 5) en forme de plaquettes séparés l'un de l'autre par une couche intermédiaire précitée (6), les éléments diamantés latéraux extérieurs (3, 5) présentant une largeur plus grande que celle du ou des éléments diamantés intérieurs (4).

8. Segment suivant l'une quelconque des revendications 1 à 7, caractérisé en ce que les éléments diamantés (3, 4, 5) sont constitués d'un mélange fritté de poudre métallique fritté et de poudre ou granulé de diamant, alors que la couche intermédiaire (6) est essentiellement constituée d'un liant métallique qui peut également être formé de poudre de métal fritté, tel que du cobalt.

**9.** Segment suivant l'une quelconque des revendications 3 à 7, caractérisé en ce que la couche intermédiaire (6) est réalisée au moyen de clinquant, par exemple en fer.

**10.** Scie circulaire (2) constituée d'un disque de coupe muni, à sa périphérie, de segments diamantés (1) suivant l'une quelconque des revendications 3 à 9, dont les éléments diamantés (3, 4, 5) et les couches intermédiaires (6) sont accolés l'un à côté de l'autre et s'étendent parallèlement au plan du disque (16) de manière à pouvoir réaliser des rainures et nervures également parallèlement à ce plan.

*Fig. 1*

*Fig. 2*

*Fig.3*

*Fig.4*

Office européen
des brevets

**RAPPORT DE RECHERCHE EUROPEENNE**

Numéro de la demande

EP 98 20 2984

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US RE25434 E (F.L.CHRISTENSEN)<br>* colonne 3, ligne 35 - ligne 58 *<br>* colonne 5, ligne 68 - colonne 6, ligne 50; figures 1-3,13-15 *<br>--- | 1-10 | B28D1/12 |
| D,A | EP 0 133 124 A (M. DURAND) 13 février 1985<br>* abrégé; page 1, ligne 5 - ligne 10 *<br>* page 2, ligne 6 - ligne 10 *<br>* page 2, ligne 29 - ligne 30 *<br>* figure *<br>--- | 1,8,10 | |
| A | DE 24 38 601 A (ERNST WINTER & SOHN GMBH)<br>26 février 1976<br>* page 7, ligne 16 - ligne 26 *<br>* figure 3 *<br>--- | 1 | |
| A | PATENT ABSTRACTS OF JAPAN<br>vol. 6, no. 172 (M-154) '1050!,<br>7 septembre 1982<br>& JP 57 083372 A (Y. ARAKAWA),<br>25 mai 1982<br>----- | | |

**DOMAINES TECHNIQUES RECHERCHES (Int.Cl.6)**

B28D

Le présent rapport a été établi pour toutes les revendications

| Lieu de la recherche | Date d'achèvement de la recherche | Examinateur |
|---|---|---|
| LA HAYE | 26 janvier 1999 | Moet, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**          EP 98 20 2984

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-01-1999

| Document brevet cité au rapport de recherche | Date de publication | Membre(s) de la famille de brevet(s) | Date de publication |
|---|---|---|---|
| US RE25434        E | | AUCUN | |
| EP 133124        A | 13-02-1985 | FR      2549769 A | 01-02-1985 |
| DE 2438601        A | 26-02-1976 | AUCUN | |

EPO FORM P0460

Pour tout renseignement concernant cette annexe : voir Journal Officiel de l'Office européen des brevets, No.12/82